**Europäisches Patentamt**

**European Patent Office**

**Office européen des brevets**

(11) Veröffentlichungsnummer: **0 334 020 B1**

(12) **EUROPÄISCHE PATENTSCHRIFT**

(45) Veröffentlichungstag der Patentschrift: **05.05.93**

(21) Anmeldenummer: **89102749.2**

(22) Anmeldetag: **17.02.89**

(51) Int. Cl.⁵: **H02K 1/28**, F16B 3/00, F16B 2/14

(54) **Doppelschrägkeil.**

(30) Priorität: **21.03.88 CH 1060/88**

(43) Veröffentlichungstag der Anmeldung:
**27.09.89 Patentblatt 89/39**

(45) Bekanntmachung des Hinweises auf die
Patenterteilung:
**05.05.93 Patentblatt 93/18**

(84) Benannte Vertragsstaaten:
**AT CH DE ES FR GB IT LI**

(56) Entgegenhaltungen:
**DE – A – 2 352 048**
**DE – C – 974 711**
**US – A – 2 870 357**

(73) Patentinhaber: **ASEA BROWN BOVERI AG**
**Haselstrasse**
**CH – 5401 Baden(CH)**

(72) Erfinder: **Schwanda, Josef**
**Bahnhofstrasse 420**
**CH – 5242 Lupfig(CH)**

EP 0 334 020 B1

## Beschreibung

Die Erfindung bezieht sich auf einen Doppelschrägkeil, insbesondere zur Pol- und Rotorringbefestigung von elektrischen Maschinen, bestehend aus zwei gleichartigen Keilhälften, die an ihren Keilflächen in Keillängssrichtung verschiebbar sind und bei Relativbewegungen zueinander die Breite des Keils in Querrichtung veränderbar ist.

Doppelschrägkeile dieser Art werden insbesondere zum Verspannen der Pole auf dem Rotorring und des Rotorrings auf dem Radstern von Synchronmaschinen verwendet (vgl. Wiedemann/Kellerberger "Konstruktion elektrischer Maschinen", Springer-Verlag Berlin/Heidelberg/New York 1967, S. 370, Abb. 367b). Sie bestehen aus zwei Keilhälften, deren axiale Länge (typisch bis 2,5 m ) derjenigen des Pols entspricht. Der Keilwinkel ist – gemessen an üblichen Keilen – sehr klein.

Die Herstellung von Keilen dieser Länge ist vergleichsweise aufwendig. Ihre Montage ist einfach, doch das Entfernen der Keile ist ohne Beschädigung der Keile und deren Sitzfläche praktisch nicht möglich.

In dem Dokument DE-A-2 352 048 ist ein Keil beschrieben, der aus zwei äusseren Teilen und einem dazwischen gleitend angeordnetem dritten Teil besteht. Das eine äussere und das dazwischenliegende Teil sind mit mehreren zusammenwirkenden Teilkeilfächen versehen. Hierbei handelt es sich um einen auf Baustellen benötigten Gegenstand, der dahingehend verbessert wurde, dass er leicht von einer festgeklemmten Lage befreit werden kann. Dieser bekannte Keil ist demgemäss nicht dazu vorgesehen, Maschinenteile dauerhaft miteinander zu verbinden.

Aufgabe der vorliegenden Erfindung ist es, einen Doppelschrägkeil anzugeben, der wirtschaftlich herzustellen ist und dessen Montage und Demontage leicht möglich ist.

Diese Aufgabe wird bei einem Doppelschrägkeil der eingangs genannten Gattung erfindungsgemäss dadurch gelöst,
dass die Keilflächen auf eine Vielzahl unter sich kongruenter Teilkeilflächen verteilt sind, die für jede Keilhälfte jeweils zumindest abschnittsweise einstückig miteinander verbunden sind, wobei sich die ergebende wirksame Breite b des Doppelschrägkeils bei Verschiebung um die Länge l aus der Beziehung

$$b = b_0 + l \cdot \tan \alpha$$

ergibt, worin $b_0$ die Anfangsbreite des Keils und $\alpha$ den Keilwinkel eines Teilkeils bedeuten.

Ein derart ausgebildeter Keil ist einfach zu fertigen, insbesondere wenn er aus einzelnen ausgestanzten Blechen zusammengesetzt ist.

Bezüglich Montage ist er ebenso problemlos einzubauen wie der bekannte Doppelschrägkeil. Bei der Demontage löst sich der Keil nach einer wesentlich kürzeren Austreibstrecke.

Die Erfindung wird nachstehend anhand eines Ausführungsbeispiels näher erläutert. In der Zeichnung zeigt

Fig. 1     eine Draufsicht auf einen Doppelschrägkeil in der Grundstellung;

Fig. 2     eine Draufsicht auf den Keil nach Fig. 1 mit gegeneinander verschobenen Keilhälften;

Fig. 3     eine Seitenansicht des Keils nach Fig. 1;

Fig. 4     einen Schnitt durch eine Blechlage in vergrössertem Massstab;

Fig. 5     einen stark vereinfachten Schnitt durch den Rotorkranz eines Hydrogenerators.

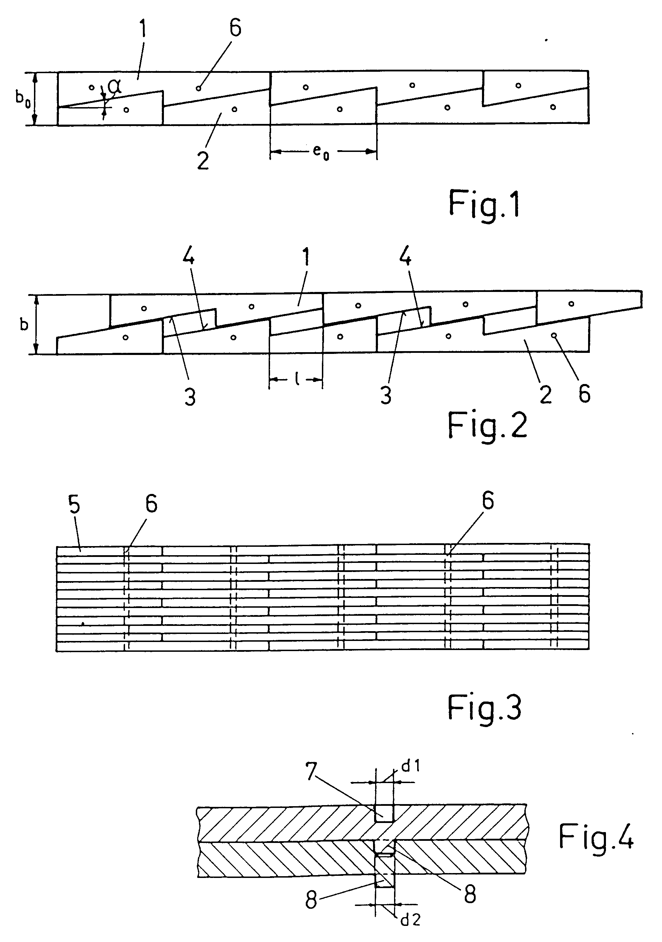

Der Doppelschrägkeil gemäss Fig. 1 besteht aus zwei Keilhälften 1 und 2. Jede Keilhälfte weist eine Vielzahl von Keilflächen 3,4 auf, die paarweise aneinanderliegen. Im Beispielsfall sind 5 Teilkeilflächen je Keilhälfte vorgesehen. Jeder dieser "Teilkeile" weist einen Keilwinkel $\alpha$ auf, der fünfmal grösser ist als ein üblicher Keil mit einer durchgehenden Keilfläche. Bei n "Teilkeilen" wäre der Keilwinkel n mal grösser.

Die Länge einer Teilkeilfläche 3,4 und der Keilwinkel $\alpha$ sind so bemessen, dass bei Verschiebung beider Keilhälften um die halbe Teilkeillänge $e_0$ die maximale Breite b des Keils erreicht ist.

Grundsätzlich können die Keilhälften 1,2 aus dem Vollen herausgearbeitet werden. Wirtschaftlicher ist es jedoch, die Keilhälften aus vielen übereinandergestapelten Einzelblechen 5, die lageweise versetzt sind, aufzubauen (Fig. 3). Diese Einzelbleche lassen sich mit der notwendigen Präzision, z.B. aus Abfall, ausstanzen. Dabei können gleichzeitig Durchgangsbohrungen 6 hergestellt werden, die im Blechstapel miteinander fluchten und so den gesamten Stapel durchdringen.

Allgemein ergibt sich die wirksame Breite b des Doppelschrägkeils bei Verschiebung um die Länge l aus der Beziehung

$$b = b_0 + l \cdot \tan \alpha$$

worin $b_0$ die Anfangsbreite des Keils und $\alpha$ den Keilwinkel eines Teilkeils bedeuten.

Die Stapel werden dann z.B. miteinander vernietet.

Eine Vereinfachung des Zusammenfügens der Einzelbleche lässt sich dadurch erzielen, dass entsprechend Fig. 4 in jedes Teilblech 5 auf der einen Seite eine Vertiefung 7 und auf der anderen Seite des Teilblechs koaxial zur Vertiefung 7 ein Vorsprung 8 angebracht wird, wobei der Innendurchmesser $d_1$ der Vertiefung 7 ein wenig kleiner ist als der Aussendurchmesser $d_2$ des Vorsprungs 8. Das Anbringen der Vertiefung 7 und des Vorsprungs 8 kann in einem einzigen Arbeitsvorgang, vorzugsweise beim Stanzen der Teilbleche 5, erfolgen, mit einem Stempel mit dem Aussendurchmesser $d_1$ und einer Matrize mit einer Vertiefung mit dem Innendurchmesser $d_2$.

Beim Zusammenpressen des Stapels werden die Vorsprünge 8 in die Vertiefungen 7 gepresst und stellen somit den Zusammenhalt des Stapels sicher.

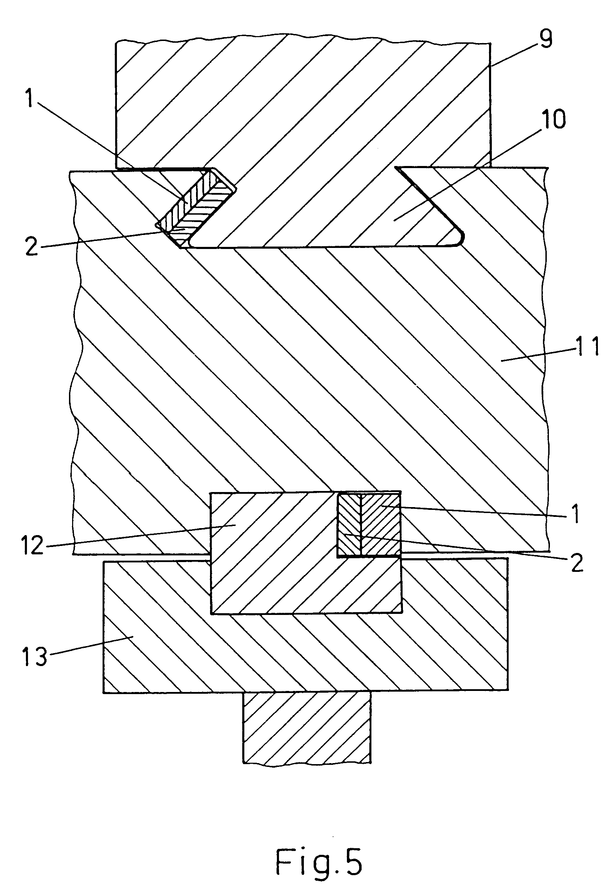

In Fig. 5 ist in vereinfachter Darstellung der bevorzugte Einsatz der erfindungsgemässen Doppelschrägkeile veranschaulicht.

In der oberen Hälfte ist ein Pol 9 mit schwalbenschwanzförmiger Polklaue 10 in einer axial verlaufenden Nut im Rotorring 11 einer Hydromaschine angeordnet. Zwischen der einen Nutwandung und der Klaue 10 ist der aus den Keilhälften 1,2 bestehende Doppelschrägkeil eingelegt. Durch gegenseitige axiale Verschiebung beider Keilhälften sind Pol 9 und Rotorring 11 miteinander verspannt.

In der unteren Hälfte der Fig. 5 ist der Rotorring 11 über axial verlaufende Recheckleisten 12 am Aussenumfang des Radsterns 13 befestigt, wobei in einer rechteckförmigen, axial verlaufenden Ausnehmung in der Rechteckleiste 12 ein Doppelschrägkeil mit den Keilhälften 1,2 eine Tangentialverkeilung bewirkt.

**Patentansprüche**

1. Doppelschrägkeil, insbesondere zur Pol- und Rotorringbefestigung von elektrischen Maschinen, bestehend aus zwei gleichartigen Keilhälften (1,2), die an ihren Keilflächen (3,4) in Keillängsrichtung verschiebbar sind und bei Relativbewegung zueinander die wirksame Breite des Keils in Querrichtung veränderbar ist, dadurch gekennzeichnet, dass die Keilflächen auf eine Vielzahl unter sich kongruenter Teilkeilflächen (3,4) verteilt sind, die für jede Keilhälfte (1,2) jeweils zumindest abschnittsweise einstückig miteinander verbunden sind, wobei sich die ergebende wirksame Breite b des Doppelschrägkeils bei Verschiebung um die Länge l aus der Beziehung

$$b = b_0 + l \cdot \tan \alpha$$

ergibt, worin $b_0$ die Anfangsbreite des Keils und $\alpha$ den Keilwinkel eines Teilkeils bedeuten.

2. Doppelschrägkeil nach Anspruch 1, dadurch gekennzeichnet, dass die Keilhälften (3,4) aus miteinander verbundenen Einzelblechen (5) bestehen (Fig. 3).

3. Doppelschrägkeil nach Anspruch 2, dadurch gekennzeichnet, dass die Einzelbleche 5 auf einer Seite mit Vertiefungen (7) und auf der anderen Seite mit an die Vertiefungen angepassten Vorsprüngen (8) versehen sind.

4. Doppelschrägkeil nach Anspruch 1 oder 2, dadurch gekennzeichnet, dass die Länge der Einzelbleche kleiner als die Gesamtlänge des Keils ist und diese im Stapel lagenweise gegeneinander versetzt sind.

**Claims**

1. Double-slope wedge, especially for the pole and rotor ring mounting of electrical machines, comprising two similar wedge halves (1, 2), which are displaceable on their wedge faces (3, 4) in the longitudinal direction of the wedge, the effective width of the wedge being variable in the transverse direction in the case of movement relative to one another, characterised in that the wedge faces are distributed over a multiplicity of mutually congruent subwedge faces (3, 4) which are in each case connected to one another at least sectionally in one piece for each wedge half (1, 2), the effective width b of the double-slope wedge resulting from displacement by the length l being given by the relationship

$$b = b_0 + l \times \tan \alpha,$$

where $b_0$ denotes the initial width of the wedge, and $\alpha$ the wedge angle of a subwedge.

2. Double-slope wedge according to Claim 1, characterised in that the wedge halves (3, 4) comprised individual laminations 5 connected to one another (Figure 3).

3. Double-slope wedge according to Claim 2, characterised in that the individual laminations (5) are provided on one side with indentations (7), and on the other side with projections (8) matching the indentations.

4. Double-slope wedge according to Claim 1 or 2, characterised in that the length of the individual laminations is smaller than the total length of the wedge, and the individual laminations are mutually staggered in position in the stack.

**Revendications**

1. Cale à double inclinaison, en particulier pour la fixation d'une pièce polaire ou d'une bague de rotor dans des machines électriques, se composant de deux moitiés de cale identiques (1,2), qui sont coulissantes sur leurs faces de calage (3,4) en direction longitudinale de la cale et dont la largeur effective de la cale dans le sens transversal est variable en cas de mouvements relatifs de l'une par rapport à l'autre, caractérisée en ce que les faces de calage sont réparties en une pluralité de faces de calage partielles (3,4) congruentes entre elles, qui pour chaque moitié de cale (1,2) sont assemblées d'une pièce à l'autre au moins par tronçons, et où la largeur effective résultante b de la cale à double inclinaison est, en cas d'un glissement d'une longueur l, donnée par la formule

$$b = b_0 + l . \tan \alpha$$

dans laquelle $b_0$ est la largeur initiale de la cale et $\alpha$ est l'angle de calage d'une cale partielle.

2. Cale à double inclinaison suivant la revendication 1, caractérisée en ce que les moitiés de cale (1, 2) se composent de tôles individuelles (5) assemblées l'une à l'autre (Fig. 3).

3. Cale à double inclinaison suivant la revendication 2, caractérisée en ce que les tôles individuelles (5) sont pourvues d'enfoncements (7) sur une face et sur l'autre face de saillies (8) adaptées aux enfoncements.

4. Cale à double inclinaison suivant la revendication 1 ou 2, caractérisée en ce que la longueur des tôles individuelles est plus petite que la longueur totale de la cale et en ce que celles-ci sont posées en couches décalées l'une par rapport à l'autre dans la pile.

Fig.1

Fig.2

Fig.3

Fig.4

Fig.5